(19) Europäisches Patentamt
European Patent Office
Office européen des brevets

(11) Publication number: **0 502 573 A1**

# (12) EUROPEAN PATENT APPLICATION

(21) Application number: **92200556.6**

(51) Int. Cl.⁵: **C09J 157/04**, C09J 133/06

(22) Date of filing: **26.02.92**

(30) Priority: **27.02.91 NL 9100351**

(43) Date of publication of application:
**09.09.92 Bulletin 92/37**

(84) Designated Contracting States:
**AT BE CH DE DK ES FR GB GR IT LI NL PT SE**

(71) Applicant: **DSM N.V.**
**Het Overloon 1**
**NL-6411 TE Heerlen(NL)**

(72) Inventor: **Pons, Dick Adriaan**
**Fazantstraat 55**
**NL-3145 CA Maassluis(NL)**
Inventor: **de Jonge, Johan Sieben**
**van Hasseltmarke 38**
**NL-8016 BS Zwolle(NL)**
Inventor: **van Hout, Johannes Barend**
**Boerhaar 15**
**NL-8131 ST Wijhe(NL)**

## (54) Use of a plastic dispersion as adhesive and the use of this dispersion as a basis for adhesives.

(57) The invention relates to the use of a plastic dispersion as adhesive and the use of a plastic dispersion as a basis for adhesives.

The plastic dispersion is based on a polymer which is based on

A. 0-50% by weight of hard monomers having a glass transition temperature higher than 20 °C,
B. 50-95% by weight of soft monomers having a glass transition temperature lower than 20 °C, and
C. 0.01-5% by weight of a polymerisable acetoacetate compound,

A + B + C together being 100% by weight.

The invention also relates to adhesives based on the plastic dispersions in question.

EP 0 502 573 A1

The invention relates to the use of a plastic dispersion as adhesive and the use of this dispersion as a basis for adhesives. The invention also relates to the adhesives based on the plastic dispersions in question.

The use of plastic dispersions as adhesive and as a basis for adhesives is disclosed in the article "High Shear PS Emulsions works at high temperatures" by Stratton ("Adhesives Age", June 1985, pp. 21-23). This article shows that the balance between various properties still has to be improved because the known plastic dispersions do not result in pressure-sensitive adhesives which possess both a good direct tack, a good shear resistance, a good peel resistance and a good creep resistance at temperatures between, for example, 20 ° C and 30 ° C and which in addition also possess a good shear resistance and a good creep resistance at elevated temperatures, for example between 40 ° C and 100 ° C.

It is the object of the invention to provide plastic dispersions which result in adhesives which possess a good direct tack, a good creep resistance and a good shear and peel resistance over a wider temperature range, for example between 10 ° C and 100 ° C, as a result of which the adhesives lose their strength less rapidly under the influence of a change in temperature, such as a rise in temperature.

The invention is characterised in that the plastic dispersion is based on a polymer which is based on

A. 0-50% by weight of hard monomers having a glass transition temperature higher than 20 ° C,

B. 50-95% by weight of soft monomers having a glass transition temperature lower than 20 ° C, and

C. 0.01-5% by weight of a polymerisable acetoacetate compound,

A + B + C together being 100% by weight.

This dispersion results in adhesives which, in addition to an outstanding direct tack, display a good creep resistance and an outstanding shear and peel resistance at relatively low temperatures as well as a good shear and creep resistance at higher temperatures. Consequently the adhesives lose their strength very much less rapidly under the influence of a rise in temperature.

The glass transition temperature of the monomers is determined by torsion pendulum measurement.

Suitable hard monomers include, for example, methyl (meth)acrylate, butyl methacrylate, ethyl methacrylate, vinyl acetate, vinyl versatate (Veova VV9), styrene and/or acrylonitrile. Moreover, hard monomers are suitable which, in addition to the unsaturated group, also contain a second functional group and/or derivatives hereof, such as, for example, (meth)acrylic acid, hydroxyethyl (meth)acrylate and/or glycidyl(meth)acrylate. Preferred hard monomers are methyl methacrylate, vinyl acetate and/or (meth)-acrylic acid.

Suitable soft monomers include, for example, butyl acrylate, 2-ethylhexyl acrylate, vinyl versatate (Veova VV10), ethene and/or butadiene. Preferred soft monomers are butyl acrylate and/or 2-ethylhexyl acrylate.

Suitable polymerisable acetoacetate compounds are compounds according to the formula (I):

$$R^2\text{-}CH = \overset{R^1}{\underset{|}{C}} - \overset{O}{\overset{\|}{C}} - O - A - \overset{O}{\overset{\|}{C}} - CH_n - (\overset{O}{\overset{\|}{C}}\text{-}CH_3)_m \qquad (I)$$

wherein

$R^1$ = H or $CH_3$,

$R^2$ = H, $CH_3$ or $R_3$, where

$$R^3 = - \overset{O}{\overset{\|}{C}} - O - A - \overset{O}{\overset{\|}{C}} - CHn - ( \overset{O}{\overset{\|}{C}} - CH_3 )_m ,$$

$$A = - \{ ( \overset{R^4}{\overset{|}{C}} - H )_p \text{-} O ) \}_q ,$$

where

p = 2-6,

q = 1-3,

$R^4$ = H or $CH_3$ and
n = 1-2,
m = 1-2 and
n + m = 3.

The acetoacetate compound preferably used is acetoacetoxyethyl methacrylate according to formula (II):

$$H_2C = \overset{CH_2}{C} - \overset{O}{\overset{\|}{C}} - O - (CH_2)_2 - O - \overset{O}{\overset{\|}{C}} - CH_2 - \overset{O}{\overset{\|}{C}} - CH_3 \qquad (II)$$

According to a preferred embodiment of the invention, the polymer is based on:

A. 5-30% by weight of hard monomers having a glass transition temperature higher than 20 ° C,
B. 64-94% by weight of soft monomers having a glass transition temperature lower than 20 ° C, and
C. 0.1-1.5% by weight of polymerisable acetoacetate compound,

A + B + C together being 100% by weight.

Preferably the polymer is based on:

A. 5-30% by weight of methyl methacrylate, vinyl acetate and/or (meth)acrylic acid,
B. 64-94% by weight of butyl acrylate and/or 2-ethylhexyl acrylate, and
C. 0.1-1.5% by weight of acetoacetoxyethyl methacrylate,

A + B + C together being 100% by weight.

The dispersions can be either aqueous dispersions or non-aqueous dispersions. Aqueous dispersions are preferably used.

The plastic dispersions can be obtained by means of the generally known emulsion polymerisation methods.

The plastic dispersions in question can be used as binders in diverse types of adhesives. Examples include adhesives suitable for floorings or wall coverings, adhesives suitable for gluing diverse materials in building and adhesives suitable for gluing materials which are difficult to glue, such as polyolefines.

The plastic dispersions can be mixed with fillers, resins and plasticisers.

Preferably, the use of chain transfer agents is excluded.

Fillers can be used, for example, in order to lower the material costs, in order to modify the rheology of the adhesive or in order in general to make the adhesive more suitable for a particular application. Suitable fillers include, for example, diverse types of chalk, lightweight spar, heavy spar, kaolin and ground quartz. The amounts in which said fillers can be used are between 0.5 and 300% by weight, calculated on the basis of the solids in the dispersion. Fillers can be mixed with the plastic dispersions by stirring them in. The fillers can also be admixed with water beforehand, if necessary with the addition of a suitable wetting agent, such as, for example, a polyphosphate.

The plastic dispersions can also be mixed with other resins, which can be either of a naturally occurring or of a synthetic type. Resins of a naturally occurring type can be prepared from wood resin, from gum resin or from a by-product from the paper industry, the so-called "tail resin". These resins can be stabilised by hydrogenation and disproportionation. They can also be esterified with monohydric or polyhydric alcohol. Resins of synthetic origin can be prepared on the basis of $C_4$, $C_9$ monomers or from mixtures hereof in any desired weight ratio. Furthermore, these resins can be modified with other monomers such as, for example, terpenes. The resins are used in order to improve the adhesive characteristics of the glue and to adapt these characteristics to the specific demands, such as those made in the various fields of application, or in order to lower the material cost. The plastic dispersions can be mixed with the resins by emulsifying these resins beforehand in water. It is also possible first to dissolve the resins in a suitable solvent, such as, for example, toluene, and then to add this solution, with stirring, to the plastic dispersions.

In order to obtain a property desired for a particular application, the plastic dispersion can also be mixed with other polymer synthetic resin dispersions which, depending on the application, can be either harder or softer. Examples of such polymer synthetic resin dispersions include, for example, vinyl acetate homopolymers and copolymers with (meth)acrylates, vinyl fumarate or maleate and (meth)acrylate homopolymers and copolymers.

Plasticisers can also be added to the plastic dispersions in order to obtain specific characteristics. Plasticisers can, for example, increase the adhesion to some substrates, such as, for example, polyvinyl chloride. By adding plasticisers, peeling of the adhesive can be facilitated, which is required for some applications. Amounts of between, preferably, 0.5 and 25% by weight of plasticiser, calculated on the basis

of the dispersion, can be added to the plastic dispersions. Suitable plasticisers include, for example, monomer plasticisers such as dibutyl phthalate and di-2-ethylhexyl phthalate and adipic esters. In addition to these monomer plasticisers, polymer plasticisers, such as, for example, reaction products based on phthalic acid or reaction products of adipic acid and diols having molecular weights, for example, higher than 1000, can also be used. These plasticisers have the advantage that they show no or very sparing migration from the adhesive layer.

Dispersions as used in the present invention are disclosure in EP-A-258988. However, this application relates to a different use. It is even pointed out in EP-A-258988 that said dispersions are unsuitable as a basis for adhesives.

WO-A-91/02759 describes a pressure-sensitive adhesive polymer based on

a) 35-60% by weight alkylacrylate,
b) 15-35% by weight vinylester,
c) 20-40% by weight diester of a dicarboxylic acid and
d) up to 5% by weight unsaturated carboxylic acid.

The present invention does not use the diester of the dicarboxylic acid. Also the molecular weights of the dispersions are different because in the method according to WO-A-91/02759 it is, in contrast to the present invention, desirable to lower the molecular weight of the polymer by the use of chain transfer agents and to use higher levels of initiator than what is commonly used. The polymerizable acetoacetate compound, which is an essential feature of the present invention, need not to be used in WO-A-91/02759 and if used, said compound has even to be crosslinked with metal salts.

The invention is illustrated with the aid of the following experiments and examples, without being restricted thereto.

Experiments 1-7: Preparation of plastic dispersions

Experiment 1

A 2-litre reactor was filled with 300 grams of demineralised water and heated to 80°C. 40 grams of a 10% solution of ammonium persulphate in water were added to the reactor and a pre-emulsion based on

| | |
|---|---|
| a) 2-ethylhexyl acrylate(2-EHA) | 800 grams |
| b) methyl methacrylate(MMA) | 100 grams |
| c) vinyl acetate(VA) | 85 grams |
| d) acrylic acid (AA) | 10 grams |
| e) acetoacetoxyethyl methacrylate(AAEM) | 5 grams |
| f) demineralised water | 200 grams |
| g) alkyl benzenesulphonate (Siponate DS10 from Alcolac) | 10 grams |
| h) nonylphenol 20 EO (Marlophen 820 from Hüls) | 20 grams |

was then metered in in the course of 4 hours. The reaction temperature was 80°C.

After metering in for 4 hours, the reaction mixture was reacted for a further 2 hours at 85°C. It was then cooled to 30°C and the pH was brought to 4.5 with the aid of ammonia. Finally, the following redox system was added:

| | |
|---|---|
| 10% tert-butyl hydroperoxide | 10 grams |
| 10% sodium formaldehyde sulphoxylate | 10 grams |

The plastic dispersion was drained off and sieved.

The physical constants of the product obtained were:

| | |
|---|---|
| solids content (% by weight)[1]) | 64.9 |
| pH (25 ° C) | 4.6 |
| particle size (nm)[2]) | 230 |
| viscosity (23 ° C, mPas)[3]) | 1560 |

1) drying for 30 minutes at 150 ° C;
2) the particle size was determined using a Malvern Autosizer;
3) the viscosity was determined at 23 ° C using a Brookfield viscometer.

Experiment 2

Experiment 1 was repeated, the monomer a)-e) being used in the following amounts:

| | |
|---|---|
| a) 2-EHA | 800 grams |
| b) MMA | 90 grams |
| c) VA | 90 grams |
| d) AA | 10 grams |
| e) AAEM | 10 grams |

The plastic dispersion obtained had the following physical constants:

| | |
|---|---|
| solids content (% by weight) | 64.7 |
| pH | 4.5 |
| particle size (nm) | 238 |
| viscosity (23 ° C, mPas) | 1515 |

Experiment 3

Experiment 1 was repeated, the monomers a)-e) being used in the following amounts:

| | |
|---|---|
| a) BA[1]) | 705 grams |
| b) MMA | 195 grams |
| c) VA | 90 grams |
| d) AA | 10 grams |
| e) AAEM | 10 grams |

1) BA = butyl acrylate

The plastic dispersion obtained had the following physical constants:

| | |
|---|---|
| solids content (% by weight) | 64.5 |
| pH | 4.5 |
| particle size (nm) | 258 |
| viscosity (23 ° C, mPas) | 1648 |

Experiment 4

Experiment 1 was repeated, the monomers a)-e) being used in the following amounts:

| | |
|---|---|
| a) 2-EHA | 800 grams |
| b) MMA | 180 grams |
| d) AA | 10 grams |
| e) AAEM | 10 grams |

The plastic dispersion obtained had the following physical constants:

| | |
|---|---|
| solids content (% by weight) | 64.1 |
| pH | 4.5 |
| particle size (nm) | 260 |
| viscosity (23° C, mPas) | 1624 |

Experiment 5

Experiment 1 was repeated, the monomers a)-e) being used in the following amounts:

| | |
|---|---|
| a) 2-EHA | 700 grams |
| b) MMA | 190 grams |
| c) VA | 90 grams |
| d) AA | 10 grams |
| e) AAEM | 10 grams |

The plastic dispersion obtained had the following physical constants:

| | |
|---|---|
| solids content (% by weight) | 64.2 |
| pH | 4.5 |
| particle size (nm) | 240 |
| viscosity (23° C, mpas) | 1426 |

Experiment 6

Experiment 1 was repeated, the monomers a)-e) being used in the following amounts:

| | |
|---|---|
| a) 2-EHA | 800 grams |
| b) MMA | 80 grams |
| c) VA | 90 grams |
| d) AA | 10 grams |
| e) AAEM | 20 grams |

The plastic dispersion obtained had the following physical constants:

| | |
|---|---|
| solids content (% by weight) | 64.2 |
| pH | 4.5 |
| particle size (nm) | 240 |
| viscosity (23° C, mpas) | 1426 |

Comparative Experiment A

Experiment 1 was repeated, the monomers a)-e) being used in the following amounts:

| | |
|---|---|
| a) 2-EHA | 800 grams |
| b) MMA | 100 grams |
| c) VA | 90 grams |
| d) AA | 10 grams |
| e) AAEM | 0 gram |

The plastic dispersion obtained had the following physical constants:

| | |
|---|---|
| solids content (% by weight) | 65.1 |
| pH | 4.5 |
| particle size (nm) | 242 |
| viscosity (23°C, mPas) | 1415 |

Example I

The dispersions according to Experiments 1-6 and Comparative Experiment A were tested to determine their suitability for use as an adhesive or as the basis for an adhesive.

The direct tack and the shear resistance at 23°C were measured using the test methods FTM 9 and FTM 8. (These FTM test methods are used by the "Fédération internationale des fabricants et transformateurs d'adhésifs et thermocollants sur papier et autres supports" [International Federation of the Manufacturers and Processors of Adhesives and Heat-sensitive Adhesives on Paper and other Supports"] and were published in June 1980 by Finat on pp. 17-20 of "Finat test methods").

The peel resistance ("peel", PSTC-1) and the shear resistance at elevated temperature ("SAFT", i.e. shear adhesion failure temperature) were determined using methods published by Shell Chemicals in Technical Manual TR 5.2.1. A load of 500 g is specified in this Manual, whereas a load of 1000 g was used for the present determination.

TABLE I

| Characteristics of plastic dispersions | | | | |
|---|---|---|---|---|
| No. | Tack FTM 9 (N) | Shear FTM 8 (hours) | Peel PSTC1 (N) | SAFT (°C) |
| 1 | 12 | >1000 | 11 | >100 |
| 2 | 11 | >1000 | 10 | >100 |
| 3 | 5 | >1000 | 11 | >100 |
| 4 | 12 | >1000 | 11 | 92 |
| 5 | 13 | >1000 | 9 | >100 |
| 6 | 7 | >1000 | 10 | >100 |
| A | 13 | 25 | 11 | 56 |

It can be seen from this table that the compositions according to Experiments 1-6 resulted in an outstanding combination of characteristics. The compositions according to Experiments 1-6 resulted, for example, in a "shear" of more than 1000 hours, whereas the composition according to Experiment A resulted in a "shear" of only 25 hours.

An adhesive based on the composition according to Experiment A would therefore, in contrast to an adhesive on the basis of a composition according to one of Experiments 1-6, for example, not meet the requirements if used as an adhesive under the bonnet of a car.

**Claims**

**1.** Use of a plastic dispersion as adhesive and use of a plastic dispersion as a basis for adhesives, characterised in that the plastic dispersion is based on a polymer which is based on

A. 0-50% by weight of hard monomers having a glass transition temperature higher than 20°C,

B. 50-95% by weight of soft monomers having a glass transition temperature lower than 20°C, and

C. 0.01-5% by weight of a polymerisable acetoacetate compound,
A + B + C together being 100% by weight.

**2.** Use according to Claims 1, characterised in that the polymer is based on
A. 5-30% by weight of hard monomers having a glass transition temperature higher than 20 °C,
B. 64-94% by weight of soft monomers having a glass transition temperature lower than 20 °C, and
C. 0.1-1.5% by weight of a polymerisable acetoacetate compound,
A + B + C together being 100% by weight.

**3.** Use according to any one of Claims 1-2, characterised in that the polymer is based on
A. 5-30% by weight of methyl methacrylate, vinyl acetate and/or (meth)acrylic acid,
B. 64-94% by weight of butyl acrylate and/or 2-ethylhexyl acrylate, and
C. 0.1-1.5% by weight of acetoacetoxyethyl methacrylate,
A + B + C together being 100% by weight.

**4.** Adhesive based on a plastic dispersion, characterised in that the plastic dispersion is based on a polymer which is based on
A. 0-50% by weight of hard monomers having a glass transition temperature higher than 20 °C,
B. 50-95% by weight of soft monomers having a glass transition temperature lower than 20 °C, and
C. 0.01-5% by weight of a polymerisable acetoacetate compound,
A + B + C together being 100% by weight.

**5.** Adhesive according to Claim 4, characterised in that the polymer is based on
A. 5-30% by weight of hard monomers having a glass transition temperature higher than 20 °C,
B. 64-94% by weight of soft monomers having a glass transition temperature lower than 20 °C, and
C. 0.1-1.5% by weight of a polymerisable acetoacetate compound,
A + B + C together being 100% by weight.

**6.** Adhesive according to any one of Claims 4-5, characterised in that the polymer is based on
A. 5-30% by weight of methyl methacrylate, vinyl acetate and/or (meth)acrylic acid,
B. 64-94% by weight of butyl acrylate and/or 2-ethylhexyl acrylate, and
C. 0.1-1.5% by weight of acetoacetoxyethyl methacrylate,
A + B + C together being 100% by weight.

**7.** Use of an adhesive according to any one of Claims 4-6.

European Patent Office

# EUROPEAN SEARCH REPORT

Application Number

EP 92 20 0556

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,P,X | WO-A-9 102 759 (AVERY)<br>* page 3, line 29 - page 4, line 3 *<br>* page 8, line 23 - line 36 *<br>* page 18, line 30 - page 19, line 35; claim 1; examples 7,9,11-19; tables 5-7 *<br>--- | 1 | C09J157/04<br>C09J133/06 |
| A | GB-A-2 213 157 (NIPPON GOHSEI)<br>* page 1, line 16 - page 2, line 7 *<br>* page 2, line 24 - page 3, line 7 *<br>* page 4, line 9 - line 21 *<br>* page 6, line 15 - line 18 *<br>* page 13 - page 15; claims 1,2; example 10; table 1 *<br>--- | 1-3 | |
| A | WO-A-8 905 829 (AVERY)<br>* page 4, line 4 - line 17 *<br>* page 6, line 1 - line 33 *<br>* page 7, line 14 - line 20; claims 1-4 *<br>--- | 1 | |
| A | WO-A-8 500 821 (AVERY)<br>* page 3 *<br>* claims 1-4 *<br>--- | 1-3 | TECHNICAL FIELDS SEARCHED (Int. Cl.5 ) |
| A,O | EP-A-0 258 988 (UNION OIL)<br>* page 11; example 1 *<br>* claims 1,2 *<br>----- | 1-3 | C09J |

The present search report has been drawn up for all claims

| Place of search | Date of completion of the search | Examiner |
|---|---|---|
| THE HAGUE | 10 JUNE 1992 | ENGEL S.L.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)